**Europäisches Patentamt**

**European Patent Office**

**Office européen des brevets**

(11) Veröffentlichungsnummer: **0 164 528**
A2

# (12) EUROPÄISCHE PATENTANMELDUNG

(21) Anmeldenummer: **85104653.2**

(22) Anmeldetag: **17.04.85**

(51) Int. Cl.⁴: **F 02 P 7/10**

(30) Priorität: **16.05.84 DE 3418152**

(43) Veröffentlichungstag der Anmeldung:
**18.12.85 Patentblatt 85/51**

(84) Benannte Vertragsstaaten:
**DE FR GB IT**

(71) Anmelder: **ROBERT BOSCH GMBH**
**Postfach 50**
**D-7000 Stuttgart 1(DE)**

(72) Erfinder: **Brammer, Hartmut**
**Am Wolfsberg 43**
**D-7143 Vaihingen/Enz(DE)**

(72) Erfinder: **Schmidt, Klaus**
**Tilsiter Strasse 28**
**D-7141 Schwieberdingen(DE)**

(54) **Zündverteiler für Brennkraftmaschinen.**

(57) Der Drehantrieb der Zündverteilerwelle (14) erfolgt durch die Nockenwelle (11) über eine zweiteilige Klauenkupplung, deren eine Kupplungshälfte (15) mittels eines Federelementes (17) an der Zündverteilerwelle (14) befestigt ist. Das aus Federblech gefertige Federelement (17) hat vier abgekröpfte, achsparallele Blattfedern (18, 19), von denen die einen beiden diametral gegenüberliegend in der einen Kupplungshälfte (15) und die anderen beiden in einem Ring (22) eingeformt sind, der durch einen Kerbstift (25) an der Zündverteilerwelle (14) befestigt ist.

Das Federelement (17) ist drehsteif und kardanisch quer zur Drehachse (20) der Zündverteilerwelle (14) beweglich; hierdurch wirkt sich ein allfälliger Achsversatz zwischen der Zündverteilerwelle (14) und der Nockenwelle (11) nicht nachteilig aus, insbesondere nicht auf die Genauigkeit des Zündzeitpunktes.

FIG. 1

R. 19381
3.5.1984 Hk/Kc

ROBERT BOSCH GMBH, 7000 Stuttgart 1

## Zündverteiler für Brennkraftmaschinen

Stand der Technik

Die Erfindung betrifft einen Zündverteiler für Brennkraftmaschinen nach der Gattung des Anspruchs 1. In der Praxis
ist die für eine einwandfreie Drehmomentübertragung erforderliche Koaxialität des Antriebsorgans und der Zündverteilerwelle zumeist nicht gegeben, sondern es besteht
immer ein sogenannter Achsversatz. Um trotz dieses Versatzes die einwandfreie Drehmomentübertragung zu erreichen,
nutzt man an der Steckkupplung das Prinzip der Kreuzkupplung, das eine diesbezüglich relative Bewegung beider
Kupplungshälften in zwei zueinander rechtwinkligen Querrichtungen zuläßt.

Die Anforderungen an den Zündverteiler hinsichtlich erhöhter Genauigkeit des Zündzeitpunktes und geringerer
Geräuschentwicklung sind mit dem Prinzip der Kreuzkupplung
nicht erreichbar.

0164528

## Vorteile der Erfindung

Mit dem Zündverteiler für Brennkraftmaschinen nach der Erfindung wird das im vorerwähnten Stand der Technik dargelegte Problem mit technisch einfachen Mitteln gelöst. Die Drehsteifigkeit und kardanische Seitenbeweglichkeit des Federelementes bewirken eine spielfreie, geräuscharme und drehsynchrone Ankopplung der Zündverteilerwelle an der Nockenwelle.

Vorteilhafte Weiterbildungen der Erfindung sind in den Unteransprüchen beschrieben. Mit der Ausgestaltung des Zündverteilers nach Anspruch 2 und insbesondere nach Anspruch 3 wird ein Weg aufgezeigt, um das Federelement technisch einfach darzustellen. Eine kardanische Seitenbeweglichkeit des Federelementes erreicht man mit der Weiterbildung des Zündverteilers nach Anspruch 4. Eine rüttelsichere Verbindung der Blattfederarme des Federelementes mit der Zündverteilerwelle und der einen Kupplungshälfte erreicht man mit der Weiterbildung des Zündverteilers gemäß Anspruch 5 und insbesondere gemäß Anspruch 6. Mit Anspruch 7 wird eine einfach gestaltete Variante des Federelementes aufgezeigt.

## Zeichnung

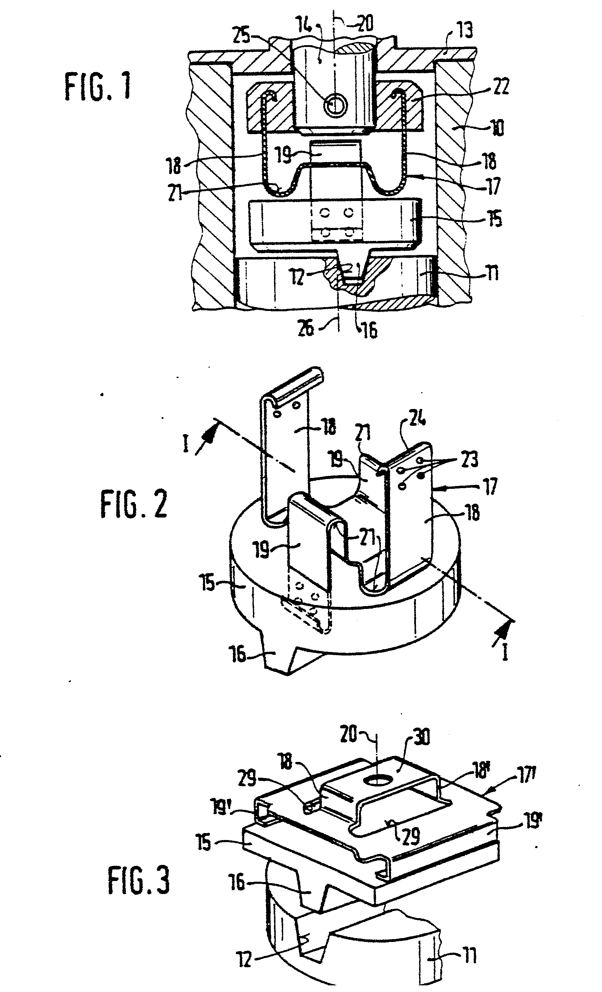

Zwei Ausführungen der Erfindung sind in der Zeichnung dargestellt und in der Figurenbeschreibung näher erläutert. Es zeigen in vereinfachter und vergrößerter Darstellung: Figur 1 einen abschnittsweisen Axialschnitt durch die erste Ausführung; Figur 2 eine raumbildliche Darstellung der ersten Ausführung gemäß Figur 1, jedoch nur der einen Kupplungshälfte mit daran befestigtem Federelement; und Figur 3 die zweite Ausführung in raumbildlicher Darstellung.

- 3 -

Beschreibung der Ausführungsbeispiele

Figur 1 zeigt von einer Brennkraftmaschine abschnittsweise
einen Motorblock 10 mit einer darin gelagerten, als Antriebsorgan wirkenden Nockenwelle 11, die eine stirnseitige, im Querschnitt V-förmige Nut 12 aufweist (um 90 Grad
versetzt dargestellt). Im Motorblock 10 ist von einem
Zündverteiler dessen Gehäuse 13 befestigt, in dem eine
Welle 14 gelagert ist. Angetrieben wird diese von einer
Steckkupplung mit der einen Kupplungshälfte 15, deren
Klauenzahn 16 in die Nut 12 der als andere Kupplungshälfte wirkenden Nockenwelle 11 eingreift. Ein aus Federblech hergestelltes Federelement 17 ist als Kreuzstück
mit vier Blattfedern 18, 19 ausgebildet; diese sind bezüglich der Drehachse 20 der Verteilerwelle 14 zum einen
paarweise diametral gegenüberliegend und zum andern
achsparallel angeordnet. Jeder Federarm 18, 19 weist in
entgegengesetzter Richtung seines Endstückes eine Abkröpfung 21 auf. Die Breitseite zweier gegenüberliegender
Blattfedern 18, 19 sind zueinander parallel angeordnet.

Das Endstück eines jedes Blattfederarmes 19 ist in der
aus Kunstoff hergestellten einen Kupplungshälfte 15 durch
Umspritzen eingeformt, und jedes Endstück der beiden
anderen Blattfedern 18 ist in einem Ring 22 aus Kunststoff ebenfalls durch Umspritzen angeformt. Jedes Endstück weist mehrere Durchbrüche 23 auf und ist als
Haken 24 ausgebildet, die Schultern für den umgespritzten
Kunststoff bilden und hierdurch ein Lösen der Blattfedern 18, 19 vom Ring 22 oder von der Kupplungshälfte 15
verhindern.

- 4 -

Ein bezüglich der Achse 20 diagonal angeordneter Kerbstift 25 sichert den Ring 22 am Endabschnitt der Verteilerwelle 14.

In der dargestellten Funktionslage ist das Federelement
in axialer Richtung derart vorgespannt, daß der Klauenzahn 16 der einen Kupplungshälfte 15 in die Nut 12 der
anderen Kupplungshälfte 11 gedrückt wird. Das Federelement 17 ist drehsteif und ermöglicht eine kardanische
Seitenbewegung, so daß ein Achsversatz, d.h. eine Nichtkoaxialität der Achse 20 der Verteilerwelle 14 zur Achse
26 der Nockenwelle 11, ausgeglichen wird.

Die zweite Ausführungsform des Federlementes 17' in Figur 3 ist im wesentlichen ebenfalls eine Platte aus Federblech mit einem durch zwei zueinander parallele
Schlitze 29 gebildeten Mittensteg 30. Durch dessen axiale
Abkröpfung sind die beiden Blattfedern 18' gebildet, die zueinander und zur Drehachse 20 parallel angeordnet sind. Der Mittensteg 30 ist in nicht dargestellter
Weise am Endabschnitt der Verteilerwelle 14 befestigt.

Die beiden anderen Blattfedern 19' bilden zwei parallel
zur Drehachse 20 abgekröpfte (abgewinkelte) Lappen, die
in nicht dargestellter Weise an dem einen Kupplungsteil
15 befestigt sind. Zur dargestellten gegensinnigen Abkröpfung beider Blattfedernpaare 18', 19' ist alternativ
deren gleichsinnige Abkröpfung möglich, die eine Verkürzung der axialen Einbauhöhe des Federelementes 17' und
mithin der Verteilerachse 14 ergibt.

0164528

R. 19381
3.5.1984 Hk/Kc

ROBERT BOSCH GMBH, 7000 Stuttgart 1

Ansprüche

1. Zündverteiler für Brennkraftmaschinen mit einer Steckkupplung für die formschlüssige Drehverbindung eines Antriebsorgans (Nockenwelle) der Brennkraftmaschine und
einer Zündverteilerwelle, wobei die eine Kupplungshälfte
an dem Endabschnitt der Zündverteilerwelle und die
andere Kupplungshälfte an dem Antriebsorgan befestigt
ist, dadurch gekennzeichnet, daß zwischen der Zündverteilerwelle (14) und der einen Kupplungshälfte (15)
ein drehsteifes und kardanisch quer zur Drehachse (20)
der Zündverteilerwelle (14) bewegliches Federelement
(17, 17') angeordnet ist.

2. Verteiler nach Anspruch 1, dadurch gekennzeichnet,
daß das Federelement (17, 17') mehrere Blattfedern (18,
19; 18', 19') hat, die paarweise einander diametral gegenüberliegen und im wesentlichen parallel zur Drehachse
(20) angeordnet sind, und daß die Breitseite der jeweils
gegenüberliegenden Blattfedern zueinander parallel sind.

3. Verteiler nach Anspruch 2, dadurch gekennzeichnet,
daß das Federelement (17) ein Kreuzstück aus Federblech ist, dessen einen beiden einander gegenüberliegenden Blattfedern (19) an der einen Kupplungshälfte (15) befestigt sind und dessen anderen beiden einander gegenüberliegenden Blattfedern (18) an einem Teil (22) des Endabschnittes der Zündverteilerwelle (14) befestigt sind.

4. Verteiler nach Anspruch 3, dadurch gekennzeichnet, daß jede Blattfeder (18, 19) des Federelementes (17) eine Abkröpfung (21) aufweist, die in entgegengesetzter Achsrichtung wie das Ende der zugehörigen Blattfeder (18, 19) weist.

5. Verteiler nach Anspruch 3 oder 4, dessen eine Kupplungshälfte aus Kunststoff besteht, dadurch gekennzeichnet, daß das Teil ein mittels eines Stiftes (25) am Endabschnitt der Verteilerwelle (14) befestigter Ring (22) aus Kunststoff ist, in welchem die Enden der einen beiden Blattfedern (18) eingefügt sind, und daß die Enden der anderen beiden Blattfedern (19) in der Kupplungshälfte (15) eingefügt sind.

6. Verteiler nach Anspruch 5, dadurch gekennzeichnet, daß die Blattfedern (18, 19) weisen quer zur Drehachse (20) der Verteilerwelle (14) angeordnete Schultern und/ oder einen Haken (24) auf, die ein Lösen der Blattfedern (18, 19) von dem Ring (22) oder der Kupplungshälfte (15) verhindern.

7. Verteiler nach Anspruch 2, dadurch gekennzeichnet, daß das Federelement (17') eine Platte aus Federblech mit einem durch zwei Schlitze (29) gebildeten Mittensteg (30) bildet, den die beiden Blattfedern (18') mit der

- 3 -

Platte verbinden, und daß die anderen beiden Blattfedern
(19') zwei von der Platte abstehende Lappen bilden.

8. Verteiler nach Anspruch 7, dadurch gekennzeichnet,
daß die jeweils beiden Blattfedern (18', 19') in Richtung
der Drehachse (20) des Zündverteilers (14) entweder
gleichsinnig oder entgegengesetztsinnig angeordnet sind.

FIG. 1

FIG. 2

FIG. 3